Europäisches Patentamt

European Patent Office

Office européen des brevets

(11) Veröffentlichungsnummer : **0 148 355**
**B1**

(12) **EUROPÄISCHE PATENTSCHRIFT**

(45) Veröffentlichungstag der Patentschrift :
21.01.87

(21) Anmeldenummer : 84113241.8

(22) Anmeldetag : 03.11.84

(51) Int. Cl.⁴ : **B 65 G 47/26**

(54) **Vorrichtung zum Vereinzeln, Wenden und Einordnen von aus einer Herstellungsmaschine längs- und querliegend austretenden länglichen Warenstücken, insbes. Süsswarenstücken.**

(30) Priorität : 24.11.83 DE 3342393
22.05.84 DE 3419039

(43) Veröffentlichungstag der Anmeldung :
17.07.85 Patentblatt 85/29

(45) Bekanntmachung des Hinweises auf die Patenterteilung : 21.01.87 Patentblatt 87/04

(84) Benannte Vertragsstaaten :
CH FR GB IT LI NL

(56) Entgegenhaltungen :
DE-A- 3 149 307
FR-A- 2 510 977
US-A- 3 142 371

(73) Patentinhaber : Otto Hänsel GmbH
Lister Damm 19
D-3000 Hannover (DE)

(72) Erfinder : Weiher, Jörg
Wiesenweg 5
D-3054 Rodenberg (DE)

(74) Vertreter : Patentanwälte Dipl.-Ing. Rudolf Bibrach
Dipl.-Ing. Elmar Rehberg
Postfach 1453 Pütterweg 6
D-3400 Göttingen (DE)

EP 0 148 355 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Vereinzeln und Einordnen von aus einer Herstellungsmaschine austretenden länglichen Warenstücken, insbesondere Süßwarenstücken o. dgl., die die Form von Riegeln, Stumpen oder Stangen haben und in eine für die Weiterverarbeitung erforderliche Längs- oder Querlage gebracht werden müssen. Je nachdem, wie die betreffenden Warenstücke aus der Herstellungsmaschine austreten, müssen sie in der einen oder anderen Richtung verdreht werden, damit beispielsweise in einer nachfolgenden Verpackungsmaschine der Hüllmaterialzuschnitt oder bei Schlauchbeutelmaschinen der Hüllmaterialschlauch um die Warenstücke ordnungsgemäß herumgelegt werden kann. Dieses dafür erforderliche Vereinzeln und Verdrehen der Warenstücke bereitet erhebliche Schwierigkeiten, wobei es gleichzeitig erforderlich ist, die Warenstücke auf ihre Ausbildung und ihren Verpackungszustand zu kontrollieren, auszurichten und einzutakten, damit ein störungsfreier Durchlauf durch die Endverpackungsanlage gewährleistet ist. Dies ist auch nicht mit Einrichtungen, wie sie die US-PS-3 142 371 zeigt, zu erreichen, wobei Flaschen aufrechtstehend durch eine Banderoliermaschine laufen und dabei lediglich um ihre Längsachse verdreht werden.

Die Aufgabe der Erfindung besteht darin, eine Vorrichtung der eingangs genannten Art in der Weise zu verbessern, daß ein für die Weiterverarbeitung der Warenstücke erforderliches Wenden derselben auf einfache Weise schnell und betriebssicher erfolgt.

Dies wird erfindungsgemäß dadurch erreicht, daß die längs- oder querliegend austretenden Warenstücke durch Wenden in eine für die Weiterverarbeitung erforderliche Quer- oder Längslage gebracht werden, indem ein kontinuierlich bewegtes Förderband und mindestens eine, die nacheinander ankommenden Warenstücke mit ihren Gängen erfassende, sich längs des Förderbandes erstreckende rotierende Wendeschnecke vorgesehen ist, deren Gangsteigung in Abhängigkeit davon, ob die Warenstücke auf dem Förderband aus einer Querlage in eine Längslage bzw. im umgekehrten Sinn zu verdrehen sind, jeweils geringer bzw. größer wird. Vorzugsweise ist zwischen dem Austritt der Warenstücke aus der Herstellungsmaschine und dem Förderband ein Stauraum für die Warenstücke vorgesehen, an welchen sich Förderband und Wendevorrichtung anschließen. Dieser Stauraum bietet die Möglichkeit, die Warenstücke zu kontrollieren und in der erforderlichen Weise zu vereinzeln. Je nachdem, wie die Warenstücke aus der Fertigungsanlage austreten, kann über dem Förderband nur eine sich längs des Bandes erstreckende, umlaufende Wendeschnecke mit größer werdender oder mit geringer werdender Gangsteigung vorgesehen sein.

Eine weitere bevorzugte Ausführungsmöglichkeit besteht darin, daß jeweils zwei einander gegenüberliegende, die querliegenden Warenstücke gleichzeitig an ihren Kopfenden erfassende und in die Förderrichtung verdrehende Wendeschnecken vorgesehen sind. Dabei können die beiden Wendeschnecken eine voneinander unterschiedliche Gangsteigung aufweisen und im gleichen oder gegenläufigen Sinn umlaufen. Für die Herstellung von Packungen, die mehrere Warenstücke enthalten, können die Wendeschnecken mehrere Gänge aufweisen. Um sicherzustellen, daß nur einwandfreie Warenstücke verpackt werden, ist zweckmäßig den Wendeschnecken eine Sortiereinrichtung zum Ausscheiden von fehlerhaften oder aneinanderhängenden Warenstücken vorgeschaltet.

Die Wendeschnecken sind gegen Wendeschnecken mit anderer Gangsteigung oder einem anderen Gangsteigungsverlauf auswechselbar.

Der Erfindungsgedanke läßt die verschiedensten Ausführungsmöglichkeiten zu. Einige davon sind in der anliegenden Zeichnung wiedergegeben, und zwar zeigen :

Figur 1    einen Längsschnitt durch die Vorrichtung zum Vereinzeln und Wenden von Warenstücken,

Figur 2    eine Draufsicht auf Fig. 1,

Figur 3    eine Draufsicht auf einen Teil der Vorrichtung mit zwei Wendeschnecken,

Figur 4    eine schematische Darstellung des Warenstücktransportes bei einer Vorrichtung gemäß Fig. 3 und

Figuren 5 bis 7    schematische Darstellungen über eine Kontroll- und Sortiereinrichtung, die bei den vorher erwähnten Einrichtungen im Bedarfsfall anwendbar ist.

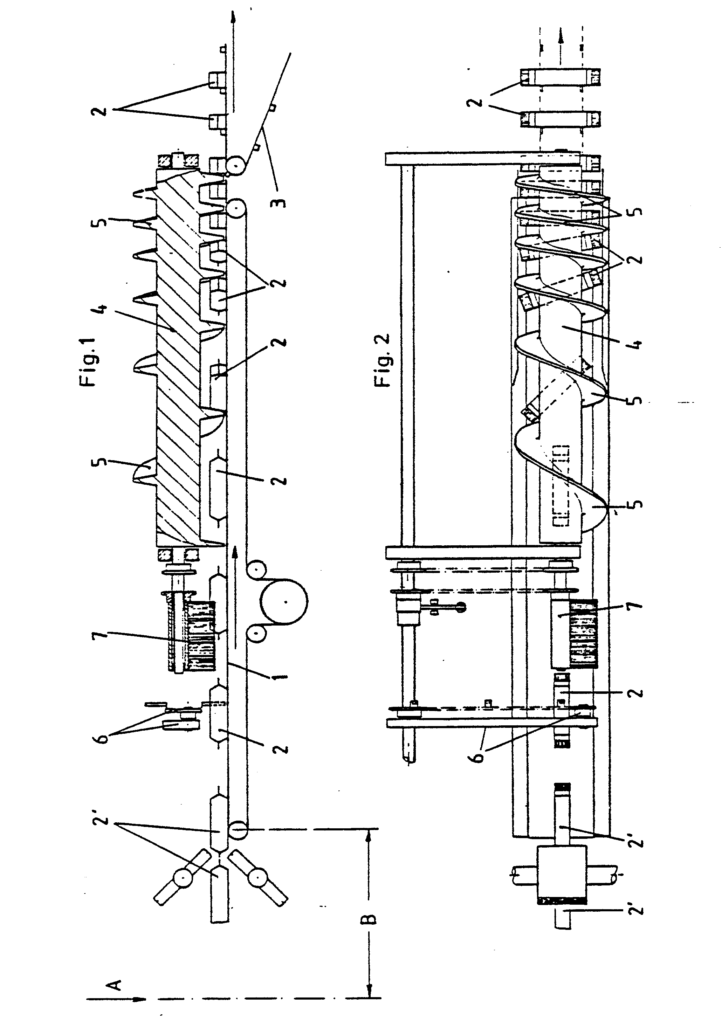

Bei der Vorrichtung gemäß den Fig. 1 und 2 ist hinter einem Austritt A einer Herstellungsmaschine ein im einzelnen nicht weiter beschriebener Stauraum B vorgesehen und dahinter ein in der eingezeichneten Pfeilrichtung kontinuierlich umlaufendes Förderband 1, welches die aus einer Herstellungsmaschine austretenden Warenstücke 2 aufnimmt und kontinuierlich weiterfördert. Die Warenstücke 2 sind bei der Anlage gemäß Fig. 1 bereits in der Herstellungsmaschine mit einem Hüllmaterial umschlossen, welches an den Kopfenden der Warenstücke verschweißt ist.

Über dem Förderband 1 ist eine Wendeschnecke 4 vorgesehen, die synchron mit dem Förderband 1 angetrieben wird. Wie ersichtlich, werden die Warenstücke 2 der Länge nach aus der Herstellungsmaschine herausgeführt. Sie liegen demzufolge auch in der Längsrichtung hintereinander und müssen um 90° gedreht werden, wenn sie in dieser Lage in eine Endverpackung auf eine andere Maschine übergeführt werden. Die Überführung der Warenstücke erfolgt durch ein sich an das Förderband 1 anschließendes weiteres Förderband 3, welches die querliegenden Warenstücke aufnimmt und wegführt.

Die Wendeschnecke 4 hat einen Schneckengang 5, von welchem die Warenstücke 2 auf dem Förderband 1 erfaßt werden. Durch die Gangsteigung werden die Warenstücke 2 mitgenommen und durch die Anlage in dem Schneckengang in eine Querrichtung verdreht, indem auf der Wendeschnecke der Schneckengang 5 zunächst eine große Steigung hat, die sich bis zum Ende der Wendeschnecke 4 hin verringert. Durch das Zusammenwirken von Förderband 1 und Wendeschnecke 4, 5 werden die Warenstücke 2 in eine Querlage zur Förderrichtung übergeführt. Durch die geringer werdende Gangsteigung werden die Warenstücke während des Verdrehens dicht hintereinander gebracht, so daß sie dann in dieser Lage auf das Förderband 3 übernommen und zu der weiteren Packmaschine überführt werden können. Die Arbeitsgeschwindigkeit des Förderbandes 1 und die Umlaufgeschwindigkeit der Förderschnecke 4 werden dementsprechend einander angepaßt, wobei die Warenstücke zunächst vereinzelt und schließlich aus der Längslage in die Querlage überführt werden.

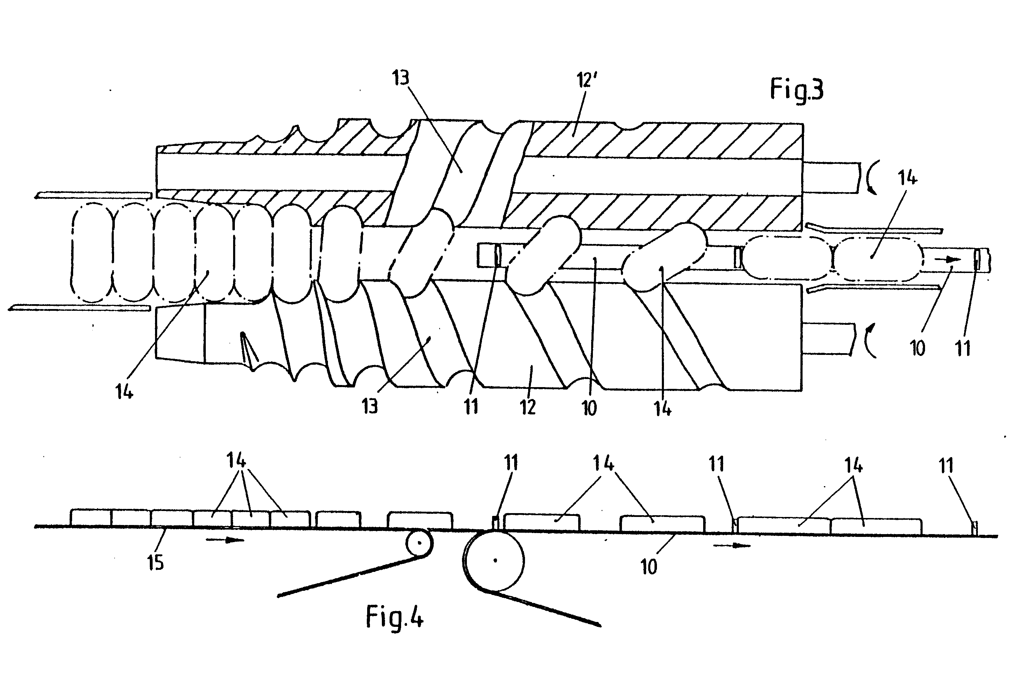

Bei der Anordnung gemäß Fig. 3 und 4 sind wiederum über einem Förderband 10, welches mit Mitnehmern 11 besetzt ist, zwei nebeneinanderliegende Wendeschnecken 12, 12' vorgesehen, mit Gängen 13. Im vorliegenden Fall vergrößert sich die Gangsteigung. Die Warenstücke 14 kommen aus der Herstellungsmaschine querliegend und dicht hintereinander auf einem Zubringerband 15 an. Die Warenstücke 14 werden an ihren Kopfenden von den Gängen der beiden Schnecken 12 und 12' gleichzeitig erfaßt, durch die wachsende Gangsteigung voneinander entfernt, d. h. vereinzelt, und um 90° verdreht. Je nach den Betriebsverhältnissen kann die Umlaufgeschwindigkeit der beiden Schnecken ebenso wie die Gangsteigung verschiebbar sein, so daß die Gewähr dafür gegeben wird, daß die dicht hintereinander in Querlage befindlichen Warenstücke 14 um 90° verdreht werden und beim Austritt aus den Wendeschnekken in Längsrichtung hintereinanderliegen.

Zweckmäßig sind die beiden Schnecken 12, 12' auf ihrer Einlaufseite verjüngt, damit die Warenstücke 14 ohne Schwierigkeit zwischen die beiden Schnecken einlaufen können. Durch diesen Einlauf der Schneckengänge 13 erfolgt gleichzeitig das Abziehen der einzelnen Warenstücke 14 von dem im Stau befindlichen Warenstückvorrat. Die Differenz der Gangsteigung beider Schnecken bewirkt das Drehen der Warenstücke 14 um 90°. Nach einer Verdrehung um etwa 40° werden die Warenstücke von dem Förderband 10 erfaßt und von den Gängen weiter bis zu 90° verdreht. Die mittlere Drehbewegung des jeweiligen Warenstückes und die Bandgeschwindigkeit sind gleich, um eine unnötige Reibung zwischen dem Förderband 10 und dem Warenstück 14 zu vermeiden. Durch eine unterschiedliche Anordnung der Mitnehmer 11 auf dem Band 10 oder durch Wendeschnecken mit mehreren Gängen ist die Möglichkeit gegeben, eine Einzel-, Doppel- oder Dreierpackung der Wärenstücke zu erreichen. Die Vorrichtung läuft kontinuierlich und wird von der Verpackungsmaschine taktmäßig angetrieben und auch synchron geregelt. Der Vorteil dieser Vorrichtung liegt darin, daß in ihr drei Arbeitsgänge bei hoher Leistung auf kleinstem Raum ausgeführt werden können.

Wie insbesondere Fig. 4 zeigt, liegen die Warenstücke 14 in Querlage dicht hintereinander auf dem Band 15, wo sie gestaut sind und von den Schnecken taktmäßig abgenommen werden.

Im Bereich der Wendeschnecken wird durch Differenzen in den Gangsteigungen die eine Kopfseite des Warenstückes zurückgehalten, während die andere beschleunigt wird, so daß als Produkt eine gesteuerte Drehung des Warenstückes um 90° erfolgt. Schließlich kann die Lage der Mitnehmer 11 auf dem Förderband 10 bestimmen, ob ein, zwei oder drei Warenstücke zusammen in eine Packungshülle auf der Verpackungsmaschine eingebracht werden. Auch hier werden die Förderbänder 10 synchron von der Verpackungsmaschine angetrieben, wobei die Warenstücke 14 zunächst in Längsrichtung liegend im Abstand hintereinander durchgeführt werden oder bei entsprechender Einstellung der Mitnehmer 11 liegen die Warenstücke längs dicht aneinanderstoßend hintereinander.

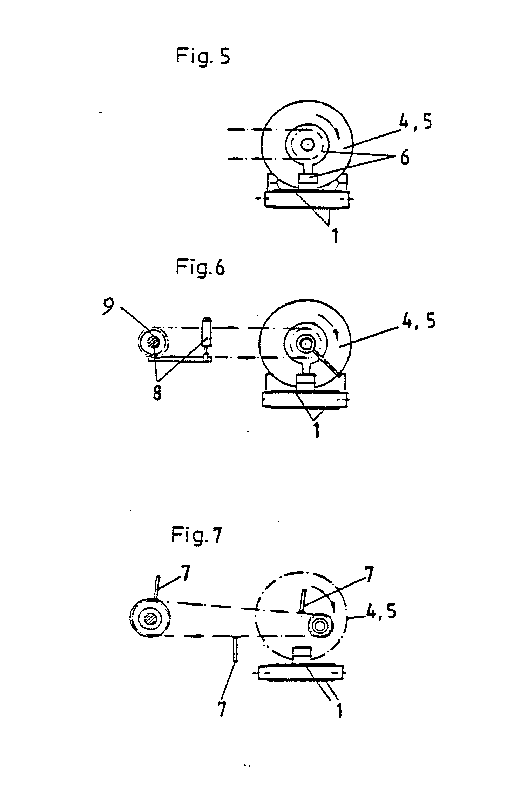

Um zu verhindern, daß unzureichend ausgebildete oder verpackte Warenstücke weiterverarbeitet werden oder daß bei der Einrichtung gemäß Fig. 1 und 2 noch zusammenhängende Packungen 2' nach der Quersiegelung ungetrennt in die Wendeschnecke 4 gelangen und hier Störungen verursachen, ist vor deren Einlauf eine Sortiereinrichtung 6 vorgesehen, die gleichzeitig den Verpackungszustand überwacht. Die Mitnehmer dieser Einrichtung laufen konstant radial um. Über eine Eintourenkupplung 8 auf der Antriebswelle 9 der Wendeschnecke 4 wird die Auswurfeinrichtung 7 Bürste angetrieben (Fig. 5-7). Über eine elektrische Überwachung werden die Packstücke, die von der Verpackungsmaschine kömmen, kontrolliert, um sowohl zu lange oder zu kurze Packungen sowie unzureichend gefüllte Packstücke auszusondern. Die sich dabei ergebenden Impulse werden gespeichert und zu einem bestimmten Zeitpunkt an die synchron zur Maschine laufende Auswurfstation abgegeben. Die Impulse steuern die Sperre der Kupplung 8, so daß der Mitnehmer der Auswurfstation eine volle Umdrehung machen kann, wobei die Fehlpackung erfaßt und mit Hilfe der Bürste 7 aus dem Produktstrom herausgebracht werden kann.

## Patentansprüche

1. Vorrichtung zum Vereinzeln und Einordnen von aus einer Herstellungsmaschine austretenden länglichen Warenstücken (2, 14), insbesondere Süßwarenstücken, gekennzeichnet dadurch, daß die längs- oder querliegend austretenden Warenstücke durch Wenden in eine für die Weiterverarbeitung erforderliche Quer- oder Längslage gebracht werden, indem ein kontinuierlich bewegtes Förderband (1) und mindestens eine, die nacheinander ankommenden Warenstücke (2, 14) mit ihren Gängen (5, 13) erfassende, sich längs des Förderbandes (1) erstreckende rotierende Wendeschnecke (4) vorgesehen ist, deren Gangsteigung in Abhängigkeit davon, ob die Warenstücke auf dem Förderband aus einer Querlage in eine Längslage bzw. im umgekehrten Sinn zu verdrehen sind, jeweils geringer bzw. größer wird.

2. Vorrichtung nach Anspruch 1, dadurch gekennzeichnet, daß zwischem dem Austritt (A) der Warenstücke aus der Herstellungsmaschine und dem Förderband (1) ein Stauraum (B) für die Warenstücke (2) vorgesehen ist, welchem sich das Förderband (1) und die Wendeschnecke (4) anschließen.

3. Vorrichtung nach Anspruch 1 oder 2, dadurch gekennzeichnet, daß über dem Förderband (1) nur eine sich längs des Förderbandes (1) erstreckende rotierende Wendeschnecke (4) mit größer werdender Gangsteigung vorgesehen ist.

4. Vorrichtung nach Anspruch 1 oder 2, dadurch gekennzeichnet, daß zwei bezüglich des Förderbandes gegenüberliegende, die querliegenden Warenstücke (14) gleichzeitig an ihren Enden erfassende und in die Förderrichtung verdrehende Wendeschnecken (12) vorgesehen sind.

5. Vorrichtung nach Anspruch 4, dadurch gekennzeichnet, daß die beiden Wendeschnecken (12) eine voneinander unterschiedliche Gangsteigung aufweisen.

6. Vorrichtung nach Anspruch 4 oder 5, dadurch gekennzeichnet, daß die Wendeschnecken (12) im gegenläufigen Sinn rotieren.

7. Vorrichtung nach einem der Ansprüche 4 bis 6, dadurch gekennzeichnet, daß für die Herstellung von Packungen, die mehrere Warenstücke enthalten, die Wendeschnecken (12) mehrere Gänge aufweisen.

8. Vorrichtung nach einem der Ansprüche 1 bis 7, dadurch gekennzeichnet, daß den Wendeschnecken (4) eine Sortiereinrichtung (6, 7) zum Ausscheiden von fehlerhaften oder aneinanderhängenden Warenstücken vorgeschaltet ist.

9. Vorrichtung nach einem der Ansprüche 1 bis 8, dadurch gekennzeichnet, daß die Wendeschnecken gegen Wendeschnecken mit anderer Gangsteigung oder einem anderen Gangsteigungsverlauf auswechselbar sind.

## Claims

1. Appliance for separating and sequencing elongate articles of merchandise (2, 14) which are emerging from a production machine, especially pieces of confectionery, characterized in that the said articles, which are lying longitudinally or transversely as they emerge, are brought into a crosswise or lengthwise position, as required for the further processing, this positioning operation being effected by turning, in that a conveying belt (1) and at least one turning-screw (4) are provided, the conveying belt (1) being caused to move continuously, while the turning-screw (4), which extends along the said belt and rotates, acquires the successively arriving articles of merchandise (2, 14) with its flights (5, 13), the pitch of this turning-screw (4) becoming progressively smaller or larger in each particular case, depending on whether the articles of merchandise on the conveying belt are to be twisted into a lengthwise position, from a crosswise one, or vice versa.

2. Appliance according to Claim 1, characterized in that a buffer-stock space (B), for the articles of merchandise (2), is provided between the exit (A) whence they emerge from the production machine, and the conveying belt (1) which, with the turning-screw (4), immediately adjoins the said buffer-stock space.

3. Appliance according to Claim 1 or 2, characterized in that only one rotating turning-screw (4) is provided above the conveying belt (1), this turning-screw (4) extending along the said belt and exhibiting a progressively increasing pitch.

4. Appliance according to Claim 1 or 2, characterized in that two turning-screws (12) are provided, which are located at opposite edges of the conveying belt, which simultaneously acquire the articles of merchandise (14) at their ends, these articles lying transversely, and which then twist the articles into the conveying direction.

5. Appliance according to Claim 4, characterized in that the two turning-screws (12) are of different pitches.

6. Appliance according to Claim 4 or 5, characterized in that the turning-screws (12) contrarotate.

7. Appliance according to one of Claims 4 to 6, characterized in that, in cases where packages containing a plurality of articles of merchandise are to be produced, the turning-screws (12) are of multi-flight design.

8. Appliance according to one of Claims 1 to 7, characterized in that a sorting arrangement (6, 7) is located upstream of the turning-screws (4), this arrangement (6, 7) serving to eliminate any articles of merchandise which are defective, or are adhering to one another.

9. Appliance according to one of Claims 1 to 8, characterized in that the turning-screws can be exchanged for others which have a different pitch, or which exhibit a different progressive pitch-variation.

## Revendications

1. Dispositif de séparation et de rangement d'objets oblongs (2, 14), notamment de confiseries sortant d'une machine de fabrication, caractérisé par le fait que les objets qui sortent en position longitudinale ou transversale sont amenés par rotation dans une position transversale ou longitudinale nécessaire pour les opérations ultérieures, comportant une bande transporteuse (1) animée d'un mouvement continu et au moins une vis sans fin (4) tournante s'étendant le long de la bande transporteuse (1), qui saisit dans ses canaux (5, 13) les objets (2, 14) qui arrivent l'un derrière l'autre, le pas de la vis sans fin dépendant du fait que les objets sur la bande transporteuse doivent être amenés d'une position transversale dans une position longitudinale ou l'inverse, c'est-à-dire que le pas est décroissant ou croissant.

2. Dispositif selon la revendication 1, caractérisé par le fait qu'entre la sortie (A) des objets de la machine et la bande transporteuse un espace de réserve (B) est prévu pour les objets (2) à la suite duquel se trouvent la bande transporteuse (1) et la vis sans fin (4).

3. Dispositif selon la revendication 1 ou 2, caractérisé par le fait qu'on prévoit au-dessus de la bande transporteuse (1) une seule vis sans fin (4) tournante qui s'étend le long de la bande transporteuse (1) et dont le pas est croissant.

4. Dispositif selon la revendication 1 ou 2, caractérisé par le fait qu'on prévoit deux vis sans fin (12) situées au-dessus de la bande transporteuse qui tournent dans la direction d'avancement et saisissent les objets (14) en position transversale par leurs deux extrémités à la fois.

5. Dispositif selon la revendication 4, caractérisé par le fait que les deux vis sans fin (12) présentent chacune un pas différent.

6. Dispositif selon la revendication 4 ou 5, caractérisé par le fait que les vis sans fin (12) tournent en sens contraire.

7. Dispositif selon l'une des revendications 4 à 6, caractérisé par le fait que pour la fabrication d'emballages qui contiennent plusieurs objets, les vis sans fin (12) présentent plusieurs canaux.

8. Dispositif selon l'une des revendications 1 à 7, caractérisé par le fait qu'on insère avant les vis sans fin (4) un dispositif de tri (6, 7) pour l'éjection des pièces défectueuses ou reliées entre elles.

9. Dispositif selon l'une des revendications 1 à 8, caractérisé par le fait que les vis sans fin peuvent être remplacées par des vis ayant un autre pas ou avec une autre variation de pas.

Fig. 1

Fig. 2

0 148 355

Fig.3

Fig.4

2

Fig. 5

4, 5

6

1

Fig. 6

9

4, 5

8

1

Fig. 7

7

7

4, 5

7

1